# EUROPÄISCHE PATENTSCHRIFT

(11) **EP 3 967 189 B1**
(45) Veröffentlichungstag und Bekanntmachung des Hinweises auf die Patenterteilung: **12.03.2025**
(21) Anmeldenummer: 21196767.4
(22) Anmeldetag: 15.09.2021
(51) Int. Cl.: A47J 31/60

(54) **GETRÄNKEBEREITER UND VERFAHREN ZUM BETRIEB EINES GETRÄNKEBEREITERS**
BEVERAGE MAKER AND METHOD FOR OPERATING SAME
DISPOSITIF DE PRÉPARATION DE BOISSONS ET PROCÉDÉ DE FONCTIONNEMENT D'UN DISPOSITIF DE PRÉPARATION DE BOISSONS

(30) Priorität: 15.09.2020 DE 102020124002
(43) Veröffentlichungstag der Anmeldung: 16.03.2022
(73) Patentinhaber: WMF GmbH, 73312 Geislingen/Steige (DE)
(72) Erfinder: Gussmann, Jochen, 73527 Schwäbisch-Gmünd (DE)
(74) Vertreter: Pfenning, Meinig & Partner mbB

(56) Entgegenhaltungen:
- EP-A1- 2 363 051
- EP-A1- 2 954 811
- EP-A1- 3 064 104
- CN-A- 106 859 345

## Beschreibung

Es wird ein Getränkebereiter bereitgestellt, der eine Steuereinheit enthält, die konfiguriert ist, in einem Reinigungsprogramm des Getränkebereiters zumindest die folgenden Schritte durchzuführen: Sicherstellen, dass im Dampferzeuger und/oder im Heißwassererzeuger ein Dampfdruck vorliegt und das mindestens ein Dampfdosierventil geschlossen ist, Stoppen einer Zufuhr elektrischer Energie zum Dampferzeuger und/oder zum Heißwassererzeuger, Öffnen des mindestens einen Dampfdosierventils, wenn der Steuereinheit signalisiert wird, dass der Getränkeauslauf eine fluidische Verbindung zu einer Reinigungsflüssigkeit aufweist und Einwirken lassen der Reinigungsflüssigkeit. Der Getränkebereiter hat die Vorteile, dass die Reinigung bzw. Entkalkung des Getränkebereiters einfacher, schneller, weniger fehleranfällig und weniger energieaufwändig (d.h. ökonomischer) möglich ist. Ferner wird ein entsprechendes Verfahren zur Reinigung eines Getränkebereiters vorgestellt.

Bei den Kaffeegetränken erfreuen sich Kaffee-Milchmischgetränke, wie Cappuccino oder Latte Macchiato, immer größerer Beliebtheit. Kaffeemaschinen, wie Kaffeevollautomaten oder Halbautomaten, sind daher in der in der Regel mit Vorrichtungen versehen, um zum Kaffee auch heißen Milchschaum oder Milch auszugeben. Da es sich bei Milch um ein flüssiges und leicht verderbliches Lebensmittel handelt, müssen in der Regel täglich Reinigungen durchgeführt werden, um die Hygiene Standards einzuhalten und Anhaftungen zu vermeiden. Die zum Aufschäumen verwendeten Dampferzeuger, wie Dampfkessel oder Durchlauferhitzer, können durch deren hohe Temperatur je nach Wasserqualität und Menge der bezogenen Milchgetränke sehr schnell verkalken. Folglich ist eine regelmäßige Entkalkung mit entsprechenden Entkalkungsmitteln durch den Benutzer notwendig.

Typischerweise wird zur Reinigung bzw. Entkalkung eines solchen Getränkebereiters ein Vorratsbehälter für Milch oder Wasser vom Getränkebereiter entfernt und durch einen Behälter mit Reinigungsflüssigkeit bzw. Entkalker ersetzt. Nach Starten eines Reinigungs- bzw. Entkalkungsprogramms wird aktiv (d.h. unter Verbrauch elektrischer Energie) über einen Venturi-Effekt oder die Wirkung einer Förderpumpe die Reinigungsflüssigkeit über eine Förderleitung in den Gentränkbereiter gefördert, wodurch die Bestandteile des Getränkebereiters gereinigt werden können. Anschließend muss der Benutzer den Behälter mit Reinigungsflüssigkeit gegen einen Behälter mit Frischwasser austauschen, sodass der Getränkebereiter in einem weiteren Schritt des Reinigungsprogramms mit Frischwasser gespült werden kann, um ein Rückbleiben von Reinigungsflüssigkeitsresten in dem Getränkebereiter zu verhindern. Bei Getränkebereitern mit einem Festwasseranschluss erfolgt die Zufuhr der Reinigungsflüssigkeit (z.B. eines Entkalkers) über die Wasserzufuhrleitung.

Diese Vorgehensweise ist nachteilig, da sie mit einem großen apparativen Aufwand verbunden ist. Zudem ist eine aufwendige und komplexe Interaktion durch den Benutzer oder einen Servicetechniker notwendig und der Zeitaufwand ist hierbei sehr hoch. Darüber hinaus ist eine Vielzahl von fehleranfälligen Arbeitsschritten erforderlich. Ferner ist durch die Notwenigkeit des aktiven Transports von Reinigungsflüssigkeit durch die Fluidleitungen über einen Venturi-Effekts oder eine Förderpumpe ein gewisses Maß an elektrischer Energie erforderlich, die grundsätzlich eingespart werden könnte, um den Reinigungsvorgang weniger energieintensiv zu gestalten.

Die EP 3 064 104 A1 offenbart Verfahren und Vorrichtungen zum Zubereiten und Ausgeben kalter und heißer Milch, die nach einem Milchausgabeschritt ein automatisches Waschen von Kanälen der Vorrichtung umfassen.

Ausgehend hiervon war es die Aufgabe der vorliegenden Erfindung, einen Getränkebereiter und ein Verfahren zum Betrieb eines Getränkebereiters bereitzustellen, welche die Nachteile aus dem Stand der Technik nicht aufweisen. Insbesondere sollte es mit dem Getränkebereiter bzw. dem Verfahren möglich sein, eine Reinigung (z.B. Entkalkung) von Komponenten eines Getränkebereiters zu vereinfachen und schneller, weniger fehleranfällig und weniger energieaufwändig (d.h. ökonomischer) zu gestalten.

Die Aufgabe wird gelöst durch den Getränkebereiter mit den Merkmalen von Anspruch 1 und dem Verfahren mit den Merkmalen von Anspruch 8. Die abhängigen Ansprüche zeigen vorteilhafte Ausgestaltungsformen auf.

Erfindungsgemäß wird ein Getränkebereiter bereitgestellt, enthaltend einen Kaltwasseranschluss;
eine Pumpe zur Beförderung von Wasser in dem Getränkebereiter;
einen Heißwassererzeuger;
eine Brüheinheit;
mindestens ein Brühventil, das stromabwärts des Heißwassererzeugers und stromaufwärts der Brüheinheit angeordnet ist;
einen Dampferzeuger;
einen Getränkeauslauf;
mindestens ein Dampfdosierventil, das stromaufwärts des Getränkeauslaufs angeordnet ist; und
eine Steuereinheit;
wobei der Heißwassererzeuger und das mindestens eine Dampfdosierventil fluidisch verbunden sind,
dadurch gekennzeichnet, dass die Steuereinheit konfiguriert ist, in einem Reinigungsprogramm des Getränkebereiters zumindest die folgenden Schritte durchzuführen:
   a) Sicherstellen, dass im Dampferzeuger und/oder im Heißwassererzeuger ein Dampfdruck vorliegt und das mindestens eine Dampfdosierventil geschlossen ist;
   b) Stoppen einer Zufuhr elektrischer Energie zum Dampferzeuger und/oder zum Heißwassererzeuger;
   c) Öffnen des mindestens einen Dampfdosierventils, wenn der Steuereinheit signalisiert wird, dass der Getränkeauslauf des Getränkebereiters eine fluidische Verbindung zu einer Reinigungsflüssigkeit aufweist;
   d) Einwirken lassen der Reinigungsflüssigkeit,
wobei der Heißwassererzeuger
   i) fluidisch parallel zum Dampferzeuger angeordnet ist; oder
   ii) in Richtung der Pumpe und der Kaltwasserquelle fluidisch in Serie zum Dampferzeuger und stromaufwärts vom Dampferzeuger angeordnet ist.

Der Begriff "Reinigung" umfasst erfindungsgemäß auch den Begriff "Entkalkung", d.h. der Begriff "Reinigungsflüssigkeit" umfasst auch den Begriff "Entkalkungsflüssigkeit". Die Begriffe "stromaufwärts" bzw. "stromabwärts" beziehen sich nicht auf einen Fluidstrom im Reinigungsbetrieb des Getränkebereiters, sondern auf einen Fluidstrom in einem Zubereitungsbetrieb des Getränkebereiters, d.h. auf einen Fluidstrom von dem Kaltwasseranschluss in Richtung des Getränkeauslaufs.

Es ist möglich, dass die Steuereinheit konfiguriert ist, das mindestens eine Dampfdosierventil unmittelbar nach dem Erhalt des Signals, dass der Getränkeauslauf und/oder ein Dampfrohr des Getränkebereiters eine fluidische Verbindung zu einer Reinigungsflüssigkeit aufweist, zu öffnen, oder nach dem Erhalt dieses Signals zunächst eine bestimmte Zeit (Abkühlzeit) vergehen zu lassen, bis das weitere Dampfdosierventil geöffnet wird. Im ersten Fall kann die Reinigungsflüssigkeit langsam über einen kontinuierlich ansteigenden Unterdruck eingezogen werden. Im zweiten Fall kann die Reinigungsflüssigkeit schnell über einen bereits bestehenden Unterdruck eingesaugt werden, was insbesondere bei langen Fluidleitungen einen Vorteil in Bezug auf den Reinigungsmittelfluss darstellen kann.

Der Heißwassererzeuger und/oder Dampferzeuger kann als Durchlauferhitzer ausgestaltet sein. Alternativ kann der Heißwassererzeuger und/oder Dampferzeuger als Kessel ausgestaltet sein.

Das Sicherstellen, dass im Dampferzeuger und/oder im Heißwassererzeuger ein Dampfdruck vorliegt, kann erzielt werden, indem die Steuereinheit veranlasst, dem Dampferzeuger und/oder dem Heißwassererzeuger eine so hohe elektrische Energiemenge zuzuführen, dass Dampf im Dampferzeuger und/oder Heißwassererzeuger erzeugt wird. Bei dem mindestens einen Dampfdosierventil handelt es sich insbesondere um kein Rückschlagventil.

Das Signalisieren der Steuereinheit, dass der Getränkeauslauf eine fluidische Verbindung zu einer Reinigungsflüssigkeit aufweist, kann entweder manuell durch einen Benutzer (z.B. über eine mit der Steuereinheit verbundene Eingabeeinheit des Getränkebereiters, beispielsweise ein Touch-Screen des Getränkebereiters) erfolgen oder automatisch durch den Getränkebereiter erfolgen (z.B. über einen Sensor zur Detektion von Reinigungsflüssigkeit, der sich am Ausgang des Getränkeauslaufs oder am Ausgang des Dampfrohrs befindet und kommunikativ mit der Steuereinheit verbunden ist).

Der Getränkebereiter hat die entscheidenden Vorteile, dass seine Reinigung einfacher, schneller, weniger fehleranfällig und weniger energieaufwändig (d.h. ökonomischer) möglich ist. Grund hierfür ist einerseits, dass der im Dampferzeuger und/oder im Heißwassererzeuger erzeugte Unterdruck dazu genutzt wird, eine Reinigungsflüssigkeit in den Getränkebereiter einzusaugen. Es wird somit keine elektrische Energie benötigt, um die Reinigungsflüssigkeit durch die Wirkung der Pumpe des Getränkebereiters in den Getränkebereiter (speziell zum Dampferzeuger und/oder Heißwassererzeuger) zu befördern. Insofern wird durch den erfindungsgemäßen Getränkebereiter elektrische Energie eingespart, da der Dampferzeuger ohnehin im Normalbetrieb einen Dampfdruck aufweist und der Heißwassererzeuger (v.a. in der Ausgestaltungsform als Durchlauferhitzer) nur um eine minimale Energiemenge stärker beheizt werden muss, um auch im Heißwassererzeuger einen Dampfdruck zu erzeugen. Ferner ist die Durchführung der Reinigung schneller und weniger arbeitsintensiv, da das sonst nötige Auswechseln eines Frischwasserbehälters zu einem Behälter mit Reinigungsflüssigkeit oder Umschließen eines Frischwasserzugangs zu einem Reinigungsflüssigkeitszugang entfällt.

Da typische Milchreiniger auf einer sauren Basis beruhen (d.h. die Reinigungsflüssigkeiten einen sauren pH-Wert aufweisen), um eine effektive Milchreinigung zu gewährleisten, ist es damit möglich, Getränkebereiter mit einem Durchlauferhitzer als Dampferzeuger und/oder Heißwassererzeuger bei der täglichen Reinigung mit zu entkalken. Je nach vorherrschender Wasserhärte kann somit eine zyklische Entkalkung (z.B. jährlich) entfallen oder deutlich später notwendig werden. Bei Getränkebereitern, bei dem der Heißwassererzeuger und/oder Dampferzeuger als Kessel ausgestaltet ist, ist tägliche Entkalkung durch Reinigungsflüssigkeit unvorteilhaft. Es macht in diesem Fall Sinn, eine zyklische Entkalkung in längeren Intervallen (z.B. wochenweise, monatsweise oder in einem Intervall von mehreren Monaten) durchzuführen. Je nach Bedarf kann die Steuereinheit somit konfiguriert sein, (automatisch) eine tägliche, wöchentliche oder monatliche Durchführung des Reinigungsprogramms zu veranlassen. Natürlich kann die Durchführung des Reinigungsprogramms auch jederzeit von einem Benutzer manuell veranlasst werden, beispielsweise über eine Auswahl der Durchführung des Reinigungsprogramms an einer Eingabeeinheit des Getränkebereiters (z.B. auf einem Touch-Screen des Getränkebereiters).

Insbesondere ist die Steuereinheit konfiguriert, während den Schritten a) bis d) die Pumpe auszuschalten oder ausgeschaltet zu lassen. Vorteilhafterweise handelt es sich bei der Pumpe des Getränkebereiters um eine Pumpe, die im ausgeschalteten Zustand die Funktion eines geschlossenen Ventils aufweist, d.h. über den Unterdruck im Dampferzeuger kann keine Flüssigkeit (Wasser) über die Pumpe aus dem Kaltwasseranschluss gesaugt werden. Bevorzugt weist die Pumpe ein integriertes Rückschlagventil auf. Insbesondere ist die Pumpe ausgewählt aus der Gruppe bestehend aus Schwingankerpumpe, Flügelzellenpumpe und Zahnradpumpe, mit integriertem Rückschlagventil.

Besonders bevorzugt ist die Steuereinheit konfiguriert, nach Schritt d) die Pumpe anzuschalten und so lange Wasser zu befördern, bis keine Reinigungsflüssigkeit mehr im Getränkebereiter ist. Dadurch kann sichergestellt werden, dass nach der Durchführung des Reinigungsprogramms keine Reinigungsflüssigkeitsreste in ein vom Getränkebereiter bereitgestelltes Getränk gelangen.

Der Getränkebereiter ist optional dadurch gekennzeichnet, dass er ein Dampfrohr und mindestens ein weiteres Dampfdosierventil stromaufwärts des Dampfrohrs enthält, wobei die die Steuereinheit konfiguriert ist, in dem Reinigungsprogramm des Getränkebereiters das mindestens eine weitere Dampfdosierventil zu öffnen, wenn der Steuereinheit signalisiert wird, dass das Dampfrohr eine fluidische Verbindung zu einer Reinigungsflüssigkeit aufweist. Es ist hierbei möglich, dass die Steuereinheit konfiguriert ist, das mindestens eine weitere Dampfdosierventil unmittelbar nach dem Erhalt dieses Signals zu öffnen, oder nach dem Erhalt dieses Signals zunächst eine bestimmte Zeit (Abkühlzeit) vergehen zu lassen, bis das weitere Dampfdosierventil geöffnet wird. Dies Ausgestaltungsform des Getränkebereiter mit einem Dampfrohr hat den Vorteil, dass auch das Dampfrohr gereinigt werden kann und das Dampfrohr neben dem Getränkeauslass als Eingang für die Reinigungsflüssigkeit verwendet werden kann, um den Heißwassererzeuger und/oder Dampferzeuger zu reinigen. Bei dem mindestens einen weiteren Dampfdosierventil handelt es sich insbesondere um kein Rückschlagventil.

Der Getränkebereiter kann ferner dadurch gekennzeichnet sein, dass die Steuereinheit konfiguriert ist, in dem Reinigungsprogramm das Brühventil zu schließen. Dies hat den Vorteil, dass während dem Reinigungsprogramm keine Reinigungsflüssigkeit in den Brüher gelangen kann.

Ferner kann der Getränkebereiter dadurch gekennzeichnet sein, dass stromaufwärts des Dampferzeugers ein Dampfspeiseventil angeordnet ist, wobei die Steuereinheit bevorzugt konfiguriert ist, im Reinigungsprogramm das Dampfspeiseventil zu schließen oder zu öffnen. Ein Schließen des Dampfspeiseventils hat den Vorteil, dass keine Reinigungsflüssigkeit das Dampfspeiseventil passieren kann und bis zum Heißwassererzeuger gelangen kann. Es wird dadurch für die Reinigung des Dampferzeugers weniger Reinigungsflüssigkeit verbraucht. Ein Öffnen des Dampfspeiseventils hat den Vorteil, dass Reinigungsflüssigkeit das Dampfspeiseventil passieren und bis zum Heißwassererzeuger gelangen kann, wodurch auch der Heißwassererzeuger gereinigt werden kann.

In einer ersten erfindungsgemäßen Alternative ist der Heißwassererzeuger des Getränkebereiters fluidisch parallel zum Dampferzeuger angeordnet, wobei dann bevorzugt stromabwärts vom Heißwassererzeuger eine Fluidleitung angeordnet ist, die über ein Bypass-Ventil (einer Bypassleitung) fluidisch mit einer Fluidleitung verbunden ist, die stromabwärts des Dampferzeugers angeordnet ist, wobei die Steuereinheit besonders bevorzugt konfiguriert ist, im Reinigungsprogramm das Bypass-Ventil zu schließen oder zu öffnen. Das Öffnen des Bypass-Ventils hat den Vorteil, dass Reinigungsflüssigkeit auch in den Heißwassererzeuger gesaugt werden kann und somit auch der Heißwassererzeuger gereinigt werden kann. Das Schließen des Bypass-Ventils hat den Vorteil, dass keine Reinigungsflüssigkeit in den Heißwassererzeuger gelangen kann, wodurch der Verbrauch an Reinigungsflüssigkeit niedriger ist, wenn nur eine Reinigung des Dampferzeugers gewünscht ist. Es ist denkbar, dass der Heißwassererzeuger des Getränkebereiters fluidisch parallel zum Dampferzeuger angeordnet ist und der Getränkebereiter keine solche Bypassleitung und kein Bypass-Ventil aufweist (kostengünstige Ausgestaltung), wobei auch in diesem Fall eine Reinigung des Dampferzeugers und des Heißwassererzeugers möglich ist.

In einer zweiten erfindungsgemäßen Alternative ist der Heißwassererzeuger in Richtung der Pumpe und der Kaltwasserquelle fluidisch in Serie zum Dampferzeuger und stromaufwärts vom Dampferzeuger angeordnet, wobei die Steuereinheit bevorzugt konfiguriert ist, im Reinigungsprogramm ein (stromaufwärts des Dampferzeugers angeordnetes) Dampfspeiseventil des Getränkebereiters zu öffnen oder zu schließen. Das Öffnen des Dampfspeiseventils hat den Vorteil, dass Reinigungsflüssigkeit durch den Dampferzeuger bis in den Heißwassererzeuger eingesaugt werden kann. Ein Schließen des Dampfspeiseventils hat den Vorteil, dass keine Reinigungsflüssigkeit bis zum Heißwassererzeuger vordringen kann, falls nur eine Reinigung des Dampferzeugers gewünscht ist. Dadurch kann Reinigungsflüssigkeit eingespart werden.

Der Getränkebereiter kann dadurch gekennzeichnet sein, dass in einer Fluidleitung stromaufwärts des Getränkeauslaufs eine Pumpe angeordnet ist, die zur Bereitstellung von Luft in die Fluidleitung geeignet ist. Dies hat den Vorteil, dass der im Dampferzeuger erzeugte Wasserdampf (z.B. während eines Normalbetriebs des Getränkebereiters) mit Luft angereichert werden kann, bevor er aus dem Getränkeauslauf austritt. Die Luft wird benötigt, um Milchschaum zu erzeugen. Diese Pumpe weist insbesondere ein integriertes Rückschlagventil auf.

Erfindungsgemäß wird ferner ein Verfahren zur Reinigung eines Getränkebereiters vorgestellt, wobei das Verfahren zumindest die folgenden Schritte umfasst:
a) Sicherstellen, dass in einem Dampferzeuger und/oder in einem Heißwassererzeuger des Getränkebereiters ein Dampfdruck vorliegt und mindestens ein Dampfdosierventil des Getränkebereiters, das stromaufwärts eines Getränkeausgangs des Getränkebereiters angeordnet ist, geschlossen ist;
b) Stoppen einer Zufuhr elektrischer Energie zum Dampferzeuger und/oder zum Heißwassererzeuger;
c) Öffnen des mindestens einen Dampfdosierventils, wenn einer Steuereinheit des Getränkebereiters signalisiert wird, dass der Getränkeauslauf des Getränkebereiters eine fluidische Verbindung zu einer Reinigungsflüssigkeit aufweist; und
d) Einwirken lassen der Reinigungsflüssigkeit,

wobei der Heißwassererzeuger und das mindestens eine Dampfdosierventil fluidisch verbunden sind, und
wobei der Heißwassererzeuger
   i) fluidisch parallel zum Dampferzeuger angeordnet ist; oder
   ii) in Richtung der Pumpe und der Kaltwasserquelle fluidisch in Serie zum Dampferzeuger und stromaufwärts vom Dampferzeuger angeordnet ist.

Es ist hierbei möglich, dass das mindestens eine Dampfdosierventil unmittelbar nach dem Erhalt des Signals, dass der Getränkeauslauf und/oder ein Dampfrohr des Getränkebereiters eine fluidische Verbindung zu einer Reinigungsflüssigkeit aufweist, geöffnet wird, oder nach dem Erhalt dieses Signals zunächst eine bestimmte Zeit (Abkühlzeit) vergehen gelassen wird, bis das weitere Dampfdosierventil geöffnet wird.

Bei dem mindestens einen Dampfdosierventil handelt es sich insbesondere um kein Rückschlagventil.

Das erfindungsgemäße Verfahren erlaubt eine einfachere, schnellere, weniger fehleranfällige und weniger energieaufwändige (d.h. ökonomischere) Reinigung bzw. Entkalkung des Getränkebereiters.

Insbesondere ist die Pumpe während den Schritten a) bis d) des Verfahrens ausgeschaltet. In einer bevorzugten Ausführungsform des Verfahrens wird die Pumpe nach Schritt d) angeschaltet und so lange Wasser befördert, bis keine Reinigungsflüssigkeit mehr im Getränkebereiter ist.

Das Verfahren ist bevorzugt dadurch gekennzeichnet, dass der Getränkebereiter ein Dampfrohr und mindestens ein weiteres Dampfdosierventil stromaufwärts des Dampfrohrs enthält, wobei in dem Verfahren das mindestens eine weitere Dampfdosierventil geöffnet wird, wenn der Steuereinheit des Getränkebereiters signalisiert wird, dass das Dampfrohr eine fluidische Verbindung zu einer Reinigungsflüssigkeit aufweist. Es ist hierbei möglich, dass das mindestens eine weitere Dampfdosierventil unmittelbar nach dem Erhalt dieses Signals geöffnet wird, oder nach dem Erhalt dieses Signals zunächst eine bestimmte Zeit (Abkühlzeit) vergehen gelassen wird, bis das weitere Dampfdosierventil geöffnet wird. Bei dem mindestens einen weiteren Dampfdosierventil handelt es sich insbesondere um kein Rückschlagventil.

Ferner kann das Verfahren dadurch gekennzeichnet sein, dass der Getränkebereiter ein Brühventil aufweist, das stromabwärts des Heißwassererzeugers und stromaufwärts einer Brüheinheit des Getränkebereiters angeordnet ist, wobei das Brühventil in dem Verfahren geschlossen wird.

Zudem kann das Verfahren dadurch gekennzeichnet sein, dass in dem Getränkebereiter stromaufwärts des Dampferzeugers ein Dampfspeiseventil angeordnet ist, wobei das Dampfspeiseventil in dem Verfahren geschlossen oder geöffnet wird.

In einer ersten erfindungsgemäßen Alternative ist das Verfahren dadurch gekennzeichnet, dass der Heißwassererzeuger des Getränkebereiters fluidisch parallel zum Dampferzeuger angeordnet ist, wobei bevorzugt stromabwärts vom Heißwassererzeuger eine Fluidleitung angeordnet ist, die über ein Bypass-Ventil (einer Bypassleitung) fluidisch mit einer Fluidleitung verbunden ist, die stromabwärts des Dampferzeugers angeordnet ist, wobei in dem Verfahren besonders bevorzugt das Bypass-Ventil geschlossen oder geöffnet wird. Es ist denkbar, dass der Heißwassererzeuger des Getränkebereiters fluidisch parallel zum Dampferzeuger angeordnet ist und der Getränkebereiter keine solche Bypassleitung und kein Bypass-Ventil aufweist (kostengünstige Ausgestaltung).

In einer zweiten erfindungsgemäßen Alternative ist das Verfahren dadurch gekennzeichnet, der Heißwassererzeuger des Getränkebereiters in Richtung der Pumpe und der Kaltwasserquelle fluidisch in Serie zum Dampferzeuger und stromaufwärts vom Dampferzeuger angeordnet ist, wobei in dem Verfahren besonders bevorzugt ein Dampfspeiseventil des Getränkebereiters geöffnet oder geschlossen wird.

Abgesehen davon kann das Verfahren dadurch gekennzeichnet sein, dass in einer Fluidleitung des Getränkebereiters stromaufwärts Getränkeauslaufs eine Pumpe des Getränkebereiters angeordnet ist, die (z.B. in einem Normalbetrieb des Getränkebereiters) Luft in der Fluidleitung bereitstellt. Die Luft wird benötigt, um Milchschaum zu erzeugen. Diese Pumpe weist insbesondere ein integriertes Rückschlagventil auf.

In einer bevorzugten Ausführungsform wird das erfindungsgemäße Verfahren bei einem erfindungsgemäßen Getränkebereiter angewandt.

Anhand der nachfolgenden Figuren und Beispiele soll der erfindungsgemäße Gegenstand näher erläutert werden, ohne diesen auf die hier dargestellten, spezifischen Ausgestaltungsformen einschränken zu wollen.

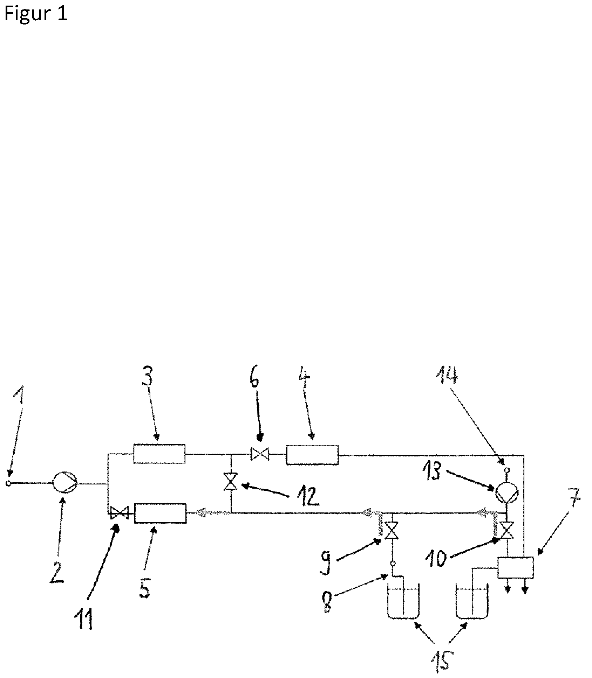

Figur 1 zeigt schematisch den Aufbau eines erfindungsgemäßen Getränkebereiters in einer Ausführungsform, bei der der Heißwassererzeuger 3 und der Dampferzeuger 5 fluidisch parallel geschaltet sind. Die Pfeilrichtung in den Fluidleitungen gibt die Flussrichtung der Reinigungsflüssigkeit im Reinigungsbetrieb an. Hier ist das Dampfrohr 8 und/oder der Getränkeauslauf 7 (bzw. dessen Ausgänge) fluidisch mit einem Gefäß 15 mit Reinigungsflüssigkeit verbunden. Zum Start des Reinigungsprogramms wird das Dampfdosierventil 9 und das weitere Dampfdosierventil 10 von der Steuereinheit entweder automatisch (durch Detektion einer fluidischen Verbindung zum Reinigungsflüssigkeit) oder manuell (durch Eingabe eines Benutzers, beispielsweise über ein Touch-Screen des Getränkebereiters) geöffnet, entweder unmittelbar nachdem eine fluidische Verbindung mit einer Reinigungsflüssigkeit etabliert wurde oder erst nach Verstreichen einer bestimmten Zeit (Abkühlzeit). Aufgrund der Öffnung des Dampfdosierventils 9 und des weiteren Dampfdosierventils 10 wird Reinigungsflüssigkeit durch den Unterdruck im Dampferzeuger 5 in den Dampferzeuger 5 eingesaugt und kann dort seine Reinigungswirkung (z.B. Entkalkungswirkung) entfalten. In dieser Ausführungsform veranlasst die Steuereinheit, dass das Bypass-Ventil 12 geschlossen wird bzw. ist und das Dampfspeiseventil ggf. geschlossen wird bzw. ist, sodass keine Reinigungsflüssigkeit in den Heißwassererzeuger 3 eintreten kann. Eine solche Schaltung der Ventile hat den Vorteil, dass nur der Dampferzeuger 5 gereinigt wird, wodurch eine geringere Menge an Reinigungsflüssigkeit benötigt wird.

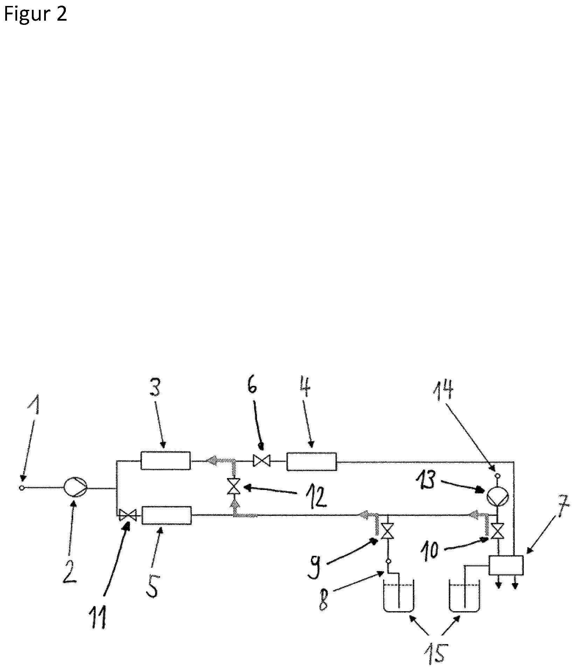

Figur 2 zeigt schematisch den Aufbau eines erfindungsgemäßen Getränkebereiters in einer Ausführungsform wie in Figur 1, nur mit dem Unterschied, dass die Steuereinheit veranlasst, das das Bypass-Ventil 12 zu öffnen bzw. offen zu halten, sodass in den Heißwassererzeuger 3 Reinigungsflüssigkeit gezogen werden kann, wenn dieser vorher unter Dampfdruck gesetzt wurde, wobei die Steuereinheit das Dampfdosierventil 9 und das weitere Dampfdosierventil 10 entweder unmittelbar nachdem eine fluidische Verbindung mit einer Reinigungsflüssigkeit etabliert wurde öffnet oder erst nach Verstreichen einer bestimmten Zeit (Abkühlzeit) öffnet. Eine solche Schaltung der Ventile hat den Vorteil, dass der Heißwassererzeuger 3 gereinigt werden kann. Falls der Dampferzeuger 5 vorher nicht unter Dampfdruck stand, d.h. unter Umgebungsdruck steht oder in einem ersten Schritt bereits gereinigt bzw. entkalkt wurde, wird nur der Heißwassererzeuger 3 gereinigt.

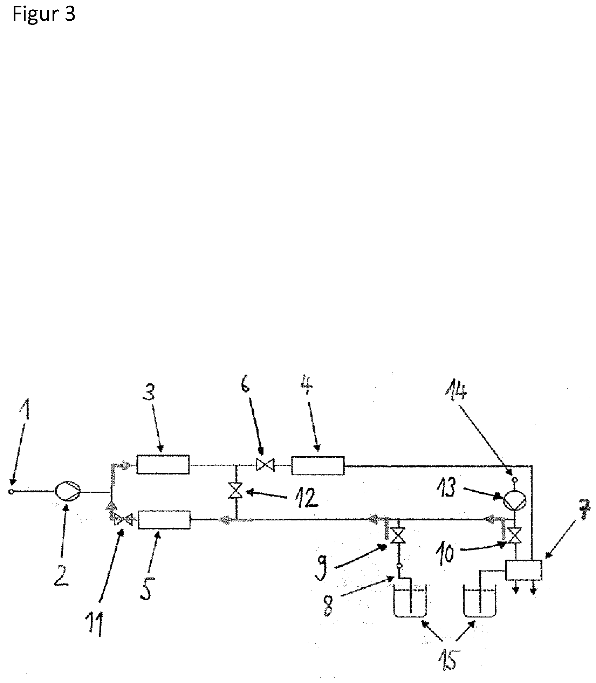

Figur 3 zeigt schematisch den Aufbau eines erfindungsgemäßen Getränkebereiters in einer Ausführungsform wie in Figur 1, nur mit dem Unterschied, dass die Steuereinheit veranlasst, das Dampfspeiseventil 11 zu öffnen bzw. offen zu halten und das Bypass-Ventil 12 zu schließen bzw. geschlossen zu halten, sodass Reinigungsflüssigkeit in den Dampferzeuger 5 und in den Heißwassererzeuger gezogen wird. Eine solche Schaltung der Ventile hat den Vorteil, dass nicht nur der Heißwassererzeuger 3 und der Dampferzeuger 5 gereinigt werden kann, sondern auch ein Fluidleitungsstück, das sich stromaufwärts vom Heißwassererzeuger 3 und Dampferzeuger 5 befindet.

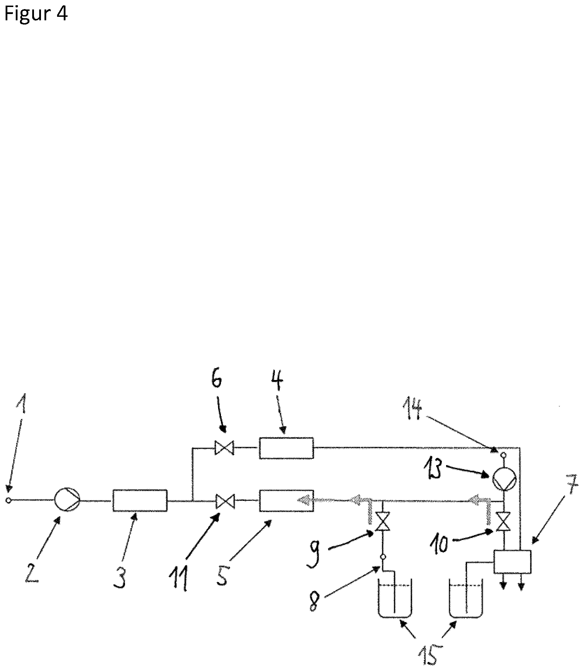

Figur 4 zeigt schematisch den Aufbau eines erfindungsgemäßen Getränkebereiters in einer Ausführungsform, bei der der Heißwassererzeuger 3 und der Dampferzeuger 5 fluidisch in Serie geschaltet sind. Zum Start des Reinigungsprogramms wird das Dampfdosierventil 9 und das weitere Dampfdosierventil 10 von der Steuereinheit entweder automatisch (durch Detektion einer fluidischen Verbindung zur Reinigungsflüssigkeit) oder manuell (durch Eingabe eines Benutzers, beispielsweise über ein Touch-Screen des Getränkebereiters) geöffnet. Aufgrund der Öffnung des Dampfdosierventils 9 und des weiteren Dampfdosierventils 10 wird Reinigungsflüssigkeit durch den Unterdruck im Dampferzeuger 5 in den Dampferzeuger 5 gezogen und kann dort seine Reinigungswirkung (z.B. Entkalkungswirkung) entfalten. In dieser Ausführungsform kann die Steuereinheit ggf. veranlassen, dass das Dampfspeiseventil 11 geschlossen wird bzw. ist, sodass keine Reinigungsflüssigkeit in den Heißwassererzeuger 3 eintreten kann. Eine solche Schaltung des Ventils hat den Vorteil, dass nur der Dampferzeuger 5 gereinigt wird, wodurch eine geringere Menge an Reinigungsflüssigkeit benötigt wird.

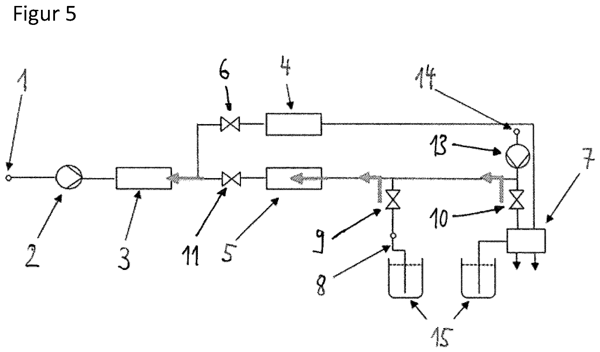

Figur 5 zeigt schematisch den Aufbau eines erfindungsgemäßen Getränkebereiters in einer Ausführungsform wie in Figur 4, nur mit dem Unterschied, dass die Steuereinheit veranlasst, das Dampfspeiseventil 11 zu öffnen bzw. offen zu halten, sodass Reinigungsflüssigkeit bis in den Heißwassererzeuger 3 gezogen wird, wenn dieser vorher unter Dampfdruck gesetzt wurde, wobei die Steuereinheit das Dampfdosierventil 9 und das weitere Dampfdosierventil 10 entweder unmittelbar nachdem eine fluidische Verbindung mit einer Reinigungsflüssigkeit etabliert wurde öffnet oder erst nach Verstreichen einer bestimmten Zeit (Abkühlzeit) öffnet. Eine solche Schaltung der Ventile hat den Vorteil, dass sowohl der Heißwassererzeuger 3 als auch der Dampferzeuger 5 gereinigt wird.

### Beispiel 1 - Dampferzeugung im parallel angeordneten Dampferzeuger

Das folgende Verfahren bezieht sich auf einen in der Figur 1 dargestellten, erfindungsgemäßen Getränkebereiter.

| Schritt | Vorgehen |
|---|---|
| 1. Chemikalie(n) bereitstellen | Das/die Gefäß(e) 15 mit Reinigungsflüssigkeit (z.B. Entkalkungsmittel) wird/werden untergestellt. |
| 2. Dampf erzeugen | Mit dem Dampferzeuger 5 wird Dampf erzeugt, der an dem Dampfrohr 8 und/oder dem Getränkeauslauf 7 austritt und in das/die Gefäß(e) 15 einströmt, wobei das Brühventil 6 und das Bypass-Ventil 12 geschlossen sind. |
| 3. Leitungssystem für Vakuum vorbereiten | Der Dampferzeuger 5 wird abgeschaltet. Das Dampfspeiseventil 11 wird ggf. geschlossen, so dass kein Wasser in den Dampferzeuger 5 nachströmen kann. Das Dampfdosierventil 9 und das weitere Dampfdosierventil 10 bleiben geöffnet. |
| 4. Chemikalien einsaugen | Der Dampf im Leitungssystem kühlt ab und kondensiert. Dadurch entsteht ein Unterdruck im Leitungssystem. Die Flüssigkeit aus dem/den Gefäß(en) 15 wird eingesaugt und gelangt in den Dampferzeuger 5. |
| 5. Wirkphase | Einwirken lassen der Chemikalie(n) in dem Reinigungsflüssigkeit zum Lösen von Rückständen. |
| 6. System Spülen | Das/die Gefäß(e) 15 wird/werden entfernt. Über die Pumpe 2 wird der Dampferzeuger 5, das Leitungssystem, das Dampfdosierventil 9, das weitere Dampfdosierventil 10, das Dampfrohr 8 und der Getränkeauslauf 7 mit kaltem und/oder heißem Wasser gespült. Zusätzlich kann der Leitungsabschnitt vom Heißwassererzeuger 3 bis zur Brüheinheit 6 gespült werden, um mögliche Rückstände der Reinigungsflüssigkeit zu entfernen. |

Wird nur ein einziges Gefäß 15 mit Reinigungsflüssigkeit untergestellt, bleibt der jeweils andere Pfad im Ablauf unberücksichtigt und entweder das Ventil 9 oder das Ventil 10 geschlossen. Der jeweils andere Pfad wird am Ende nur mit Wasser gespült.

### Beispiel 2 - Dampferzeugung im parallel angeordneten Heißwassererzeuger

Das folgende Verfahren bezieht sich auf einen in der Figur 2 dargestellten, erfindungsgemäßen Getränkebereiter.

| Schritt | Vorgehen |
|---|---|
| 1. Chemikalie(n) | Das/die Gefäß(e) 15 mit Reinigungsflüssigkeit (z.B. |

| bereitstellen | Entkalkungsmittel) wird/werden untergestellt. |
|---|---|
| 2. Dampf erzeugen | Mit dem Heißwassererzeuger 3 wird Dampf erzeugt. Das Bypass-Ventil 12, Dampfdosierventil 9 und/oder weitere Dampfdosierventil 10 ist/sind geöffnet. An dem Dampfrohr 8 und/oder dem Getränkeauslauf 7 tritt Dampf aus und strömt in das/die Gefäß(e) 15, wobei das Brühventil 6 und das Dampfspeiseventil 11 geschlossen sind. |
| 3. Leitungssystem für Vakuum vorbereiten | Der Heißwassererzeuger 3 wird abgeschaltet. Das Dampfspeiseventil 11 und das Brühventil 6 sind geschlossen. Das Bypass-Ventil 12, Dampfdosierventil 9 und/oder das weitere Dampfdosierventil 10 bleiben geöffnet. |
| 4. Chemikalie(n) einsaugen | Der Dampf im Leitungssystem kühlt ab und kondensiert. Dadurch entsteht ein Unterdruck im Leitungssystem. Die Flüssigkeit aus dem/den Gefäß(en) 15 wird eingesaugt und gelangt in den Heißwassererzeuger 3. |
| 5. Wirkphase | Einwirken lassen der Chemikalie(n) zum Lösen von Rückständen. |
| 6. System Spülen | Das/die Gefäß(e) 15 wird/werden entfernt. Über die Pumpe 2 wird der Heißwassererzeuger 3, das Leitungssystem, das Dampfdosierventil 9, das weitere Dampfdosierventil 10, das Dampfrohr 8 und der Getränkeauslauf 7 mit kaltem und/oder heißem Wasser gespült. Zusätzlich kann über Öffnen des Dampfspeiseventils 11 der Leitungsabschnitt vom Dampferzeuger 5 bis zur Brüheinheit 6 gespült werden, um mögliche Rückstände der Reinigungsflüssigkeit zu entfernen. |

Wird nur ein einziges Gefäß 15 mit Reinigungsflüssigkeit untergestellt, bleibt der jeweils andere Pfad im Ablauf unberücksichtigt und entweder das Ventil 9 oder das Ventil 10 geschlossen. Der jeweils andere Pfad wird am Ende nur mit Wasser gespült.

### Beispiel 3 - Dampferzeugung im parallel angeordneten Dampferzeuger und Heißwassererzeuger

Das folgende Verfahren bezieht sich auf einen in der Figur 3 dargestellten, erfindungsgemäßen Getränkebereiter.

| Schritt | Vorgehen |
|---|---|
| 1. Chemikalie(n) bereitstellen | Das/die Gefäß(e) 15 mit Reinigungsflüssigkeit (z.B. Entkalkungsmittel) wird/werden untergestellt. |
| 2. Dampf erzeugen | Mit dem Heißwassererzeuger 3 und Dampferzeuger 5 wird Dampf erzeugt. Das Dampfspeiseventil 11, das Dampfdosierventil 9 und/oder das weitere Dampfdosierventil 10 sind geöffnet. An dem Dampfrohr 8 und/oder dem Getränkeauslauf 7 tritt Dampf aus und strömt in das/die Gefäß(e) 15, wobei das Brühventil 6 geschlossen ist. |
| 3. Leitungssystem für Vakuum vorbereiten | Der Heißwassererzeuger 3 und der Dampferzeuger 5 werden abgeschaltet. Das Brühventil 6 und das Bypass-Ventil sind geschlossen. Das Dampfspeiseventil 11, Dampfdosierventil 9 und/oder weitere Dampfdosierventil 10 bleibt/bleiben geöffnet. |
| 4. Chemikalie(n) einsaugen | Der Dampf im Leitungssystem kühlt ab und kondensiert. Dadurch entsteht ein Unterdruck im Leitungssystem. Die Flüssigkeit aus dem/den Gefäß(en) 15 wird eingesaugt und gelangt in den Heißwassererzeuger 3 und den Dampferzeuger 5. |
| 5. Wirkphase | Einwirken lassen der Chemikalie(n) zum Lösen von Rückständen. |
| 6. System Spülen | Das/die Gefäß(e) 15 wird/werden entfernt. Über die Pumpe 2 wird der Heißwassererzeuger 3 und Dampferzeuger 5, das Leitungssystem, das Dampfdosierventil 9, das weitere Dampfdosierventil 10, das Dampfrohr 8 und der Getränkeauslauf 7 mit kaltem und/oder heißem Wasser gespült. Das Bypass-Ventil 12 ist dabei geöffnet. Das Brühventil 6 ist geschlossen. |

Wird nur ein einziges Gefäß 15 mit Reinigungsflüssigkeit untergestellt, bleibt der jeweils andere Pfad im Ablauf unberücksichtigt und entweder das Ventil 9 oder das Ventil 10 geschlossen. Der jeweils andere Pfad wird am Ende nur mit Wasser gespült.

### Beispiel 4 - Dampferzeugung im seriell angeordneten Dampferzeuger

Das folgende Verfahren bezieht sich auf einen in der Figur 4 dargestellten, erfindungsgemäßen Getränkebereiter.

| Schritt | Vorgehen |
|---|---|
| 1. Chemikalie(n) bereitstellen | Das/die Gefäß(e) 15 mit Reinigungsflüssigkeit (z.B. Entkalkungsmittel) wird/werden untergestellt. |
| 2. Dampf erzeugen | Mit dem Dampferzeuger 5 wird Dampf erzeugt, der an dem Dampfrohr 8 und/oder dem Getränkeauslauf 7 austritt und in das/die Gefäß(e) 15 einströmt, wobei das Brühventil 6 geschlossen ist. |
| 3. Leitungssystem für Vakuum vorbereiten | Der Dampferzeuger 5 wird abgeschaltet. Das Dampfspeiseventil 11 wird ggf. geschlossen, so dass kein Wasser in den Dampferzeuger 5 nachströmen kann. Das Dampfdosierventil 9 und/oder das weitere Dampfdosierventil 10 bleiben geöffnet. |
| 4. Chemikalie(n) einsaugen | Der Dampf im Leitungssystem kühlt ab und kondensiert. Dadurch entsteht ein Unterdruck im Leitungssystem. Die Flüssigkeit aus dem/den Gefäß(en) 15 wird eingesaugt und gelangt in den Dampferzeuger 5. |
| 5. Wirkphase | Einwirken lassen der Chemikalie(n) zum Lösen von Rückständen. |
| 6. System Spülen | Das/die Gefäß(e) 15 wird/werden entfernt. Über die Pumpe 2 wird der Dampferzeuger 5, das Leitungssystem, das Dampfdosierventil 9, das weitere Dampfdosierventil 10, das Dampfrohr 8 und der Getränkeauslauf 7 mit kaltem und/oder heißem Wasser gespült. |

Wird nur ein einziges Gefäß 15 mit Reinigungsflüssigkeit untergestellt, bleibt der jeweils andere Pfad im Ablauf unberücksichtigt und entweder das Ventil 9 oder das Ventil 10 geschlossen. Der jeweils andere Pfad wird am Ende nur mit Wasser gespült.

### Beispiel 5 - Dampferzeugung im seriell angeordneten Dampferzeuger und Heißwassererzeuger

Das folgende Verfahren bezieht sich auf einen in der Figur 5 dargestellten, erfindungsgemäßen Getränkebereiter.

| Schritt | Vorgehen |
|---|---|
| 1. Chemikalie(n) bereitstellen | Das/die Gefäß(e) 15 mit Reinigungsflüssigkeit (z.B. Entkalkungsmittel) wird/werden untergestellt. |
| 2. Dampf erzeugen | Mit dem Heißwassererzeuger 3 und dem Dampferzeuger 5 wird jeweils Dampf erzeugt. Das Dampfspeiseventil 11, das Dampfdosierventil 9 und/oder das weitere Dampfdosierventil 10 sind geöffnet. An dem Dampfrohr 8 und/oder dem Getränkeauslauf 7 tritt Dampf aus und strömt in das/die Gefäß(e) 15, das Brühventil 6 ist geschlossen. |
| 3. Leitungssystem für Vakuum vorbereiten | Der Heißwassererzeuger 3 und der Dampferzeuger 5 werden abgeschaltet. Das Brühventil 6 ist geschlossen. Das Dampfspeiseventil 11, das Dampfdosierventil 9 und/oder das weitere Dampfdosierventil 10 bleiben geöffnet. |
| 4. Chemikalie(n) einsaugen | Der Dampf im Leitungssystem kühlt ab und kondensiert. Dadurch entsteht ein Unterdruck im Leitungssystem. Die Flüssigkeit aus dem/den Gefäß(en) 15 wird eingesaugt und gelangt in den Dampferzeuger 5 und in den Heißwassererzeuger 3. |
| 5. Wirkphase | Einwirken lassen der Chemikalie(n) zum Lösen von Rückständen. |
| 6. System Spülen | Das/die Gefäß(e) 15 wird/werden entfernt. Über die Pumpe 2 wird der Heißwassererzeuger 3 und Dampferzeuger 5, das Leitungssystem, das Dampfdosierventil 9, das weitere Dampfdosierventil 10, das Dampfrohr 8 und der Getränkeauslauf 7 mit kaltem und/oder heißem Wasser gespült. Das Brühventil 6 ist geschlossen. |

Die Dampferzeugung kann auch sequentiell erfolgen, d.h. beispielsweise zuerst im Dampferzeuger 5 und dann im Heißwassererzeuger 3. Dabei wird im ersten Schritt der Dampferzeuger 5 beheizt und über das Vakuum mit Reinigungsflüssigkeit (z.B. Entkalkungsmittel) gefüllt. Im 2. Schritt nur der Heißwassererzeuger beheizt (Dampf erzeugt) und das gesamte Leitungsstück mit Reinigungsflüssigkeit (z.B. Entkalkungsmittel) gefüllt.

In einer alternativen Vorgehensweise wird nur im Heißwassererzeuger 3 Dampf produziert und der Dampferzeuger 5 ist ausgeschaltet.

Wird nur ein einziges Gefäß 15 mit Reinigungsflüssigkeit untergestellt, bleibt der jeweils andere Pfad im Ablauf unberücksichtigt und entweder das Ventil 9 oder das Ventil 10 geschlossen. Der jeweils andere Pfad wird am Ende nur mit Wasser gespült.

### Beispiel 6 - Zeitliches Intervall von Reinigungsprogrammen

Falls der Dampferzeuger und Heißwassererzeuger als Durchlauferhitzer ausgestaltet sind, können diese bei einer täglichen Reinigung des Getränkebereiters "mitgereinigt" werden. Da der Heißwassererzeuger kalkunempfindlicher ist, kann dieser alternativ nur in größeren Zeitabständen gereinigt werden (z.B. nur wöchentlich).

Falls der Dampferzeuger und Heißwassererzeuger als Kesselsystem ausgestaltet sind, können diese bei einer wöchentlichen, monatlichen oder im Intervall von mehreren Monaten erfolgenden Reinigung gereinigt werden.

In beiden Fällen ist das erfindungsgemäße Verfahren zum Reinigen eines Getränkebereiters vor allem dann vorteilhaft, wenn es sich bei dem Kaltwasseranschluss nicht um einen Kaltwassertank, sondern um einen Festwasseranschluss handelt. Grund hierfür ist, dass das erfindungsgemäße Reinigungsverfahren kein aufwändiges Lösen des Festwasseranschlusses erfordert, das regelmäßig auch einen geschulten Servicetechniker erfordert. Das erfindungsgemäße Verfahren gestaltet sich in dieser Hinsicht wesentlich einfacher und schneller und kann auch von ungeschulten Bedienpersonen durchgeführt werden.

### Bezugszeichenliste

- 1:: Kaltwasseranschluss;
- 2:: Pumpe zur Beförderung von Flüssigkeit in dem Getränkebereiter;
- 3:: Heißwassererzeuger;
- 4:: Brüheinheit;
- 5:: Dampferzeuger;
- 6:: Brühventil;
- 7:: Getränkeauslauf;
- 8:: Dampfrohr;
- 9:: Dampfdosierventil, das stromabwärts des Dampferzeugers angeordnet ist;
- 10:: weiteres Dampfdosierventil;
- 11:: Dampfspeiseventil;
- 12:: Bypass-Ventil;
- 13:: Pumpe zur Bereitstellung von Luft;
- 14:: Luftanschluss;
- 15:: Gefäß mit Reinigungsflüssigkeit.

## Patentansprüche

1. Getränkebereiter, enthaltend
einen Kaltwasseranschluss (1);
eine Pumpe (2) zur Beförderung von Wasser in dem Getränkebereiter; einen Heißwassererzeuger (3);
eine Brüheinheit (4);
mindestens ein Brühventil (6), das stromabwärts des Heißwassererzeugers (3) und stromaufwärts der Brüheinheit (4) angeordnet ist;
einen Dampferzeuger (5);
einen Getränkeauslauf (7);
mindestens ein Dampfdosierventil (10), das stromaufwärts des Getränkeauslaufs (7) angeordnet ist; und
eine Steuereinheit;
wobei der Heißwassererzeuger (3) und das mindestens eine Dampfdosierventil (10) fluidisch verbunden sind,
**dadurch gekennzeichnet, dass** die Steuereinheit konfiguriert ist, in einem Reinigungsprogramm des Getränkebereiters zumindest die folgenden Schritte durchzuführen:
a) Sicherstellen, dass im Dampferzeuger (5) und/oder im Heißwassererzeuger (3) ein Dampfdruck vorliegt und das mindestens ein Dampfdosierventil (10) geschlossen ist;
b) Stoppen einer Zufuhr elektrischer Energie zum Dampferzeuger (5) und/oder zum Heißwassererzeuger (3);
c) Öffnen des mindestens einen Dampfdosierventils (10), wenn der Steuereinheit signalisiert wird, dass der Getränkeauslauf (7) des Getränkebereiters eine fluidische Verbindung zu einer Reinigungsflüssigkeit aufweist; und
d) Einwirken lassen der Reinigungsflüssigkeit;
wobei der Heißwassererzeuger (3)
i) fluidisch parallel zum Dampferzeuger (5) angeordnet ist; oder
ii) in Richtung der Pumpe (2) und der Kaltwasserquelle fluidisch in Serie zum Dampferzeuger (5) und stromaufwärts vom Dampferzeuger (5) angeordnet ist.

2. Getränkebereiter gemäß Anspruch 1, **dadurch gekennzeichnet, dass** die Steuereinheit konfiguriert ist, nach Schritt d) die Pumpe (2) anzuschalten und von der Pumpe (2) so lange Wasser zu befördern, bis keine Reinigungsflüssigkeit mehr im Getränkebereiter ist.

3. Getränkebereiter gemäß einem der Ansprüche 1 und 2, **dadurch gekennzeichnet, dass** der Getränkebereiter ein Dampfrohr (8) und mindestens ein weiteres Dampfdosierventil (9) stromaufwärts des Dampfrohrs (8) enthält, wobei die Steuereinheit konfiguriert ist, in dem Reinigungsprogramm des Getränkebereiters das mindestens eine weitere Dampfdosierventil (9) zu öffnen, wenn der Steuereinheit signalisiert wird, dass das Dampfrohr (8) eine fluidische Verbindung zu einer Reinigungsflüssigkeit aufweist.

4. Getränkebereiter gemäß einem der vorhergehenden Ansprüche,
**dadurch gekennzeichnet, dass** die Steuereinheit konfiguriert ist, im Reinigungsprogramm das Brühventil (6) zu schließen.

5. Getränkebereiter gemäß dem vorhergehenden Anspruch, **dadurch gekennzeichnet, dass** stromaufwärts des Dampferzeugers (5) ein Dampfspeiseventil (11) angeordnet ist, wobei die Steuereinheit bevorzugt konfiguriert ist, im Reinigungsprogramm das Dampfspeiseventil (11) zu schließen oder zu öffnen.

6. Getränkebereiter gemäß einem der vorhergehenden Ansprüche,
**dadurch gekennzeichnet, dass** der Heißwassererzeuger (3) fluidisch parallel zum Dampferzeuger (5) angeordnet ist undstromabwärts vom Heißwassererzeuger (3) eine Fluidleitung angeordnet ist, die über ein Bypass-Ventil (12) fluidisch mit einer Fluidleitung verbunden ist, die stromabwärts des Dampferzeugers (5) angeordnet ist, wobei die Steuereinheit besonders bevorzugt konfiguriert ist, im Reinigungsprogramm das Bypass-Ventil (12) zu schließen oder zu öffnen.

7. Getränkebereiter gemäß Anspruch 5, **dadurch gekennzeichnet, dass** der Heißwassererzeuger (3) in Richtung der Pumpe (2) und der Kaltwasserquelle fluidisch in Serie zum Dampferzeuger (5) und stromaufwärts vom Dampferzeuger (5) angeordnet ist und die Steuereinheit konfiguriert ist, im Reinigungsprogramm ein Dampfspeiseventil (11) des Getränkebereiters zu öffnen oder zu schließen.

8. Verfahren zur Reinigung eines Getränkebereiters, wobei das Verfahren zumindest die folgenden Schritte umfasst:
a) Sicherstellen, dass in einem Dampferzeuger (5) und/oder in einem Heißwassererzeuger (3) des Getränkebereiters ein Dampfdruck vorliegt und mindestens ein Dampfdosierventil (10) des Getränkebereiters, das stromaufwärts eines Getränkeausgangs (7) des Getränkebereiters angeordnet ist, geschlossen ist;
b) Stoppen einer Zufuhr elektrischer Energie zum Dampferzeuger (5) und/oder zum Heißwassererzeuger (3);
c) Öffnen des mindestens einen Dampfdosierventils (10), wenn einer Steuereinheit des Getränkebereiters signalisiert wird, dass der Getränkeauslauf (7) des Getränkebereiters eine fluidische Verbindung zu einer Reinigungsflüssigkeit aufweist; und
d) Einwirken lassen der Reinigungsflüssigkeit;
wobei der Heißwassererzeuger (3) und das mindestens eine Dampfdosierventil (10) fluidisch verbunden sind, und
wobei der Heißwassererzeuger (3)
i) fluidisch parallel zum Dampferzeuger (5) angeordnet ist; oder
ii) in Richtung der Pumpe (2) und der Kaltwasserquelle fluidisch in Serie zum Dampferzeuger (5) und stromaufwärts vom Dampferzeuger (5) angeordnet ist.

9. Verfahren gemäß Anspruch 8, **dadurch gekennzeichnet, dass** der Getränkebereiter ein Dampfrohr (8) und mindestens ein weiteres Dampfdosierventil (9) stromaufwärts des Dampfrohrs (8) enthält, wobei in dem Verfahren das mindestens eine weitere Dampfdosierventil (9) geöffnet wird, wenn der Steuereinheit des Getränkebereiters signalisiert wird, dass das Dampfrohr (8) eine fluidische Verbindung zu einer Reinigungsflüssigkeit aufweist.

10. Verfahren gemäß einem der Ansprüche 8 oder 9, **dadurch gekennzeichnet, dass** der Getränkebereiter ein Brühventil (6) aufweist, das stromabwärts des Heißwassererzeugers (3) und stromaufwärts einer Brüheinheit (4) des Getränkebereiters angeordnet ist, wobei das Brühventil (6) in dem Verfahren geschlossen wird.

11. Verfahren gemäß einem der Ansprüche 8 bis 10, **dadurch gekennzeichnet, dass** in dem Getränkebereiter stromaufwärts des Dampferzeugers (5) ein Dampfspeiseventil (11) angeordnet ist, wobei das Dampfspeiseventil (11) in dem Verfahren geschlossen oder geöffnet wird.

12. Verfahren gemäß einem der Ansprüche 8 bis 11, **dadurch gekennzeichnet, dass** der Heißwassererzeuger (3) des Getränkebereiters fluidisch parallel zum Dampferzeuger (5) angeordnet ist und stromabwärts vom Heißwassererzeuger (3) eine Fluidleitung angeordnet ist, die über ein Bypass-Ventil (12) fluidisch mit einer Fluidleitung verbunden ist, die stromabwärts des Dampferzeugers (5) angeordnet ist, wobei in dem Verfahren besonders bevorzugt das Bypass-Ventil (12) geschlossen oder geöffnet wird.

13. Verfahren gemäß Anspruch 11, **dadurch gekennzeichnet, dass** der Heißwassererzeuger (3) des Getränkebereiters in Richtung der Pumpe (2) und der Kaltwasserquelle fluidisch in Serie zum Dampferzeuger (5) und stromaufwärts des Dampferzeugers (5) angeordnet ist und in dem Verfahren bevorzugt ein Dampfspeiseventil (11) des Getränkebereiters geöffnet oder geschlossen wird.

14. Verfahren gemäß einem der Ansprüche 8 bis 13, **dadurch gekennzeichnet, dass** das Verfahren bei einem Getränkebereiter gemäß einem der Ansprüche 1 bis 7 angewandt wird.

## Claims

1. A beverage maker, comprising
a cold water connection point (1);
a pump (2) for conveying water into the beverage maker;
a hot water generator (3);
a brewing unit (4);
at least one brewing valve (6), which is arranged downstream of the hot water generator (3) and upstream of the brewing unit (4);
a steam generator (5);
a beverage outlet (7);
at least one steam dosing valve (10), which is arranged upstream of the beverage outlet (7); and
a control unit;
wherein the hot water generator (3) and the at least one steam dosing valve (10) are fluidically connected,
**characterized in that** the control unit is configured to carry out at least the following steps in a cleaning program of the beverage maker:
a) ensuring that a steam pressure is present in the steam generator (5) and/or in the hot water generator (3), and that the at least one steam dosing valve (10) is closed;
b) stopping a supply of electrical energy to the steam generator (5) and/or to the hot water generator (3);
c) opening the at least one steam dosing valve (10) when it is signaled to the control unit that the beverage outlet (7) of the beverage maker has a fluidic connection to a cleaning liquid; and
d) leaving the cleaning liquid to take effect;
wherein the hot water generator (3)
i. is arranged fluidically parallel to the steam generator (5); or
ii. in the direction of the pump (2) and the cold water source, is arranged fluidically in series with the steam generator (5) and upstream of the steam generator (5).

2. The beverage maker according to claim 1, **characterized in that** the control unit is configured to switch on the pump (2) after step d) and to convey water from the pump (2) until there is no longer any cleaning liquid in the beverage maker.

3. The beverage maker according to one of claims 1 and 2, **characterized in that** the beverage maker comprises a steam pipe (8) and at least one further steam dosing valve (9) upstream of the steam pipe (8), wherein the control unit is configured to open the at least one further steam dosing valve (9) in the cleaning program of the beverage maker when it is signaled to the control unit that the steam pipe (8) has a fluidic connection to a cleaning liquid.

4. The beverage maker according to any one of the preceding claims,
**characterized in that** the control unit is configured to close the brewing valve (6) in the cleaning program.

5. The beverage maker according to the preceding claim, **characterized in that** a steam feed valve (11) is arranged upstream of the steam generator (5), wherein the control unit is preferably configured to close or to open the steam feed valve (11) in the cleaning program.

6. The beverage maker according to any one of the preceding claims,
**characterized in that** the hot water generator (3) is arranged fluidically parallel to the steam generator (5), and a fluid line is arranged downstream of the hot water generator (3), said fluid line being fluidically connected via a bypass valve (12) to a fluid line that is arranged downstream of the steam generator (5), wherein the control unit is particularly preferably configured to close or to open the bypass valve (12) in the cleaning program.

7. The beverage maker according to claim 5, **characterized in that** the hot water generator (3), in the direction of the pump (2) and the cold water source, is arranged fluidically in series with the steam generator (5) and upstream of the steam generator (5), and the control unit is configured to open or to close a steam feed valve (11) of the beverage maker in the cleaning program.

8. A method for cleaning a beverage maker, wherein the method comprises at least the following steps:
a) ensuring that a steam pressure is present in a steam generator (5) and/or in a hot water generator (3) of the beverage maker, and that at least one steam dosing valve (10) of the beverage maker, which is arranged upstream of a beverage outlet (7) of the beverage maker, is closed;
b) stopping a supply of electrical energy to the steam generator (5) and/or to the hot water generator (3);
c) opening the at least one steam dosing valve (10) when it is signaled to a control unit of the beverage maker that the beverage outlet (7) of the beverage maker has a fluidic connection to a cleaning liquid; and
d) leaving the cleaning liquid to take effect;
wherein the hot water generator (3) and the at least one steam dosing valve (10) are fluidically connected; and
wherein the hot water generator (3)
i. is arranged fluidically parallel to the steam generator (5); or
ii. in the direction of the pump (2) and the cold water source, is arranged fluidically in series with the steam generator (5) and upstream of the steam generator (5).

9. The method according to claim 8, **characterized in that** the beverage maker comprises a steam pipe (8) and at least one further steam dosing valve (9) upstream of the steam pipe (8), wherein, in the method, the at least one further steam dosing valve (9) is opened when it is signaled to the control unit of the beverage maker that the steam pipe (8) has a fluidic connection to a cleaning liquid.

10. The method according to any one of claims 8 or 9, **characterized in that** the beverage maker has a brewing valve (6), which is arranged downstream of the hot water generator (3) and upstream of a brewing unit (4) of the beverage maker, wherein the brewing valve (6) is closed in the method.

11. The method according to any one of claims 8 to 10, **characterized in that**, in the beverage maker, a steam feed valve (11) is arranged upstream of the steam generator (5), wherein the steam feed valve (11) is closed or opened in the method.

12. The beverage maker according to any one of claims 8 to 11, **characterized in that** the hot water generator (3) of the beverage maker is arranged fluidically parallel to the steam generator (5), and a fluid line is arranged downstream of the hot water generator (3), said fluid line being fluidically connected via a bypass valve (12) to a fluid line that is arranged downstream of the steam generator (5), wherein, in the method, the bypass valve (12) is particularly preferably closed or opened.

13. The method according to claim 11, **characterized in that** the hot water generator (3) of the beverage maker, in the direction of the pump (2) and the cold water source, is arranged fluidically in series with the steam generator (5) and upstream of the steam generator (5), and, in the method, a steam feed valve (11) of the beverage maker is preferably opened or closed.

14. The method according to any one of claims 8 to 13, **characterized in that** the method is applied in a beverage maker according to any one of claims 1 to 7.

## Revendications

1. Préparateur de boissons, contenant
une prise d'eau froide (1) ;
une pompe (2) permettant d'amener de l'eau dans le préparateur de boissons ;
un générateur d'eau chaude (3) ;
une unité d'infusion (4) ;
au moins une vanne d'infusion (6) agencée en aval du générateur d'eau chaude (3) et en amont de l'unité d'infusion (4) ;
un générateur de vapeur (5) ;
une sortie de boisson (7) ;
au moins une vanne de dosage de vapeur (10) agencée en amont de la sortie de boisson (7) ; et
une unité de commande ;
dans lequel le générateur d'eau chaude (3) et la au moins une vanne de dosage de vapeur (10) sont connectés de manière fluidique,
**caractérisé en ce que** l'unité de commande est configurée pour, au cours d'un programme de nettoyage du préparateur de boissons, mettre en œuvre au moins les étapes ci-dessous consistant à :
a) vérifier qu'il y a une pression de vapeur dans le générateur de vapeur (5) et/ou dans le générateur d'eau chaude (3) et qu'au moins une vanne de dosage de vapeur (10) est fermée ;
b) arrêter l'alimentation en énergie électrique du générateur de vapeur (5) et/ou du générateur d'eau chaude (3) ;
c) ouvrir la au moins une vanne de dosage de vapeur (10) lorsque l'unité de commande reçoit le signal que la sortie de boisson (7) du préparateur de boissons présente une connexion fluidique avec un liquide de nettoyage ; et
d) laisser agir le liquide de nettoyage ;
dans lequel le générateur d'eau chaude (3)
i. est agencé de manière fluidique parallèlement au générateur de vapeur (5) ; ou
ii. est agencé de manière fluidique en série par rapport au générateur de vapeur (5) et en amont du générateur de vapeur (5) en direction de la pompe (2) et de la source d'eau froide.

2. Préparateur de boissons selon la revendication 1, **caractérisé en ce que** l'unité de commande est configurée pour allumer la pompe (2) après l'étape d) et pour amener de l'eau de la pompe (2) jusqu'à ce qu'il n'y ait plus de liquide de nettoyage dans le préparateur de boissons.

3. Préparateur de boissons selon l'une quelconque des revendications 1 et 2, **caractérisé en ce que** le préparateur de boissons contient un tube de vapeur (8) et au moins une vanne de dosage de vapeur (9) supplémentaire en amont du tube de vapeur (8), dans lequel l'unité de commande est configurée pour ouvrir la au moins une vanne de dosage de vapeur (9) supplémentaire pendant le programme de nettoyage du préparateur de boissons lorsque l'unité de commande reçoit le signal que le tube de vapeur (8) présente une connexion fluidique avec un liquide de nettoyage.

4. Préparateur de boissons selon l'une quelconque des revendications précédentes, **caractérisé en ce que** l'unité de commande est configurée pour fermer la vanne d'infusion (6) pendant le programme de nettoyage.

5. Préparateur de boissons selon la revendication précédente, **caractérisé en ce qu'**une vanne d'alimentation en vapeur (11) est agencée en amont du générateur de vapeur (5), dans lequel l'unité de commande est de manière préférée configurée pour fermer ou ouvrir la vanne d'alimentation en vapeur (11) pendant le programme de nettoyage.

6. Préparateur de boissons selon l'une quelconque des revendications précédentes, **caractérisé en ce que** le générateur d'eau chaude (3) est agencé de manière fluidique parallèlement au générateur de vapeur (5) et **en ce qu'**une conduite de fluide, reliée de manière fluidique par l'intermédiaire d'une soupape de dérivation (12) à une conduite de fluide agencée en aval du générateur de vapeur (5), est agencée en aval du générateur d'eau chaude (3), dans lequel l'unité de commande est de manière particulièrement préférée configurée pour fermer ou ouvrir la soupape de dérivation (12) pendant le programme de nettoyage.

7. Préparateur de boissons selon la revendication 5, **caractérisé en ce que** le générateur d'eau chaude (3) est agencé de manière fluidique en série par rapport au générateur de vapeur (5) et en amont du générateur de vapeur (5) dans la direction de la pompe (2) et de la source d'eau froide, et l'unité de commande est configurée pour ouvrir ou fermer une soupape d'alimentation en vapeur (11) du préparateur de boissons pendant le programme de nettoyage.

8. Procédé de nettoyage d'un préparateur de boissons, dans lequel le procédé comprend au moins les étapes ci-dessous consistant à :
a) vérifier qu'il y a une pression de vapeur dans un générateur de vapeur (5) et/ou un générateur d'eau chaude (3) du préparateur de boissons et qu'au moins une vanne de dosage de vapeur (10) du préparateur de boissons, située en amont d'une sortie de boisson (7) du préparateur de boissons, est fermée ;
b) arrêter l'alimentation en énergie électrique du générateur de vapeur (5) et/ou du générateur d'eau chaude (3) ;
c) ouvrir la au moins une vanne de dosage de vapeur (10) lorsque l'unité de commande du préparateur de boissons reçoit le signal que la sortie de boisson (7) du préparateur de boissons présente une connexion fluidique avec un liquide de nettoyage ; et
d) laisser agir le liquide de nettoyage ;
dans lequel le générateur d'eau chaude (3) et la au moins une vanne de dosage de vapeur (10) sont connectés de manière fluidique, et
dans lequel le générateur d'eau chaude (3)
i. est agencé de manière fluidique parallèlement au générateur de vapeur (5) ; ou
ii. est agencé de manière fluidique en série par rapport au générateur de vapeur (5) et en amont du générateur de vapeur (5) en direction de la pompe (2) et de la source d'eau froide.

9. Procédé selon la revendication 8, **caractérisé en ce que** le préparateur de boissons contient un tube de vapeur (8) et au moins une soupape de dosage de vapeur (9) supplémentaire en amont du tube de vapeur (8), dans lequel la au moins une soupape de dosage de vapeur (9) supplémentaire est ouverte au cours du procédé lorsque l'unité de commande du préparateur de boissons reçoit le signal que le tube de vapeur (8) présente une connexion fluidique avec un liquide de nettoyage.

10. Procédé selon l'une quelconque des revendications 8 ou 9, **caractérisé en ce que** le préparateur de boissons présente une vanne d'infusion (6) agencée en aval du générateur d'eau chaude (3) et en amont d'une unité d'infusion (4) du préparateur de boissons, la vanne d'infusion (6) étant fermée au cours du procédé.

11. Procédé selon l'une quelconque des revendications 8 à 10, **caractérisé en ce qu'**une vanne d'alimentation en vapeur (11) est agencée dans le préparateur de boissons en amont du générateur de vapeur (5), la vanne d'alimentation en vapeur (11) étant fermée ou ouverte au cours du procédé.

12. Procédé selon l'une quelconque des revendications 8 à 11, **caractérisé en ce que** le générateur d'eau chaude (3) du préparateur de boissons est agencé de manière fluidique parallèlement au générateur de vapeur (5) et **en ce qu'**une conduite de fluide, reliée de manière fluidique par l'intermédiaire d'une soupape de dérivation (12) à une conduite de fluide agencée en aval du générateur de vapeur (5), est agencée en aval du générateur d'eau chaude (3), la soupape de dérivation (12) étant de manière particulièrement préférée fermée ou ouverte au cours du procédé.

13. Procédé selon la revendication 11, **caractérisé en ce que** le générateur d'eau chaude (3) du préparateur de boissons est agencé de manière fluidique en série par rapport au générateur de vapeur (5) et en amont du générateur de vapeur (5) en direction de la pompe (2) et de la source d'eau froide, et une vanne d'alimentation en vapeur (11) du préparateur de boissons est de manière préférée ouverte ou fermée au cours du procédé.

14. Procédé selon l'une quelconque des revendications 8 à 13, **caractérisé en ce que** le procédé est appliqué à un préparateur de boissons selon l'une quelconque des revendications 1 à 7.
